(19) Europäisches Patentamt / European Patent Office / Office européen des brevets

(11) **EP 4 763 440 A1**

(12) **EUROPEAN PATENT APPLICATION**

(43) Date of publication:
**24.06.2026   Bulletin 2026/26**

(21) Application number: **25226051.8**

(22) Date of filing: **19.12.2025**

(51) International Patent Classification (IPC):
***B25J 9/16*** (2006.01)

(52) Cooperative Patent Classification (CPC):
**B25J 9/1674; B25J 9/163;** B25J 9/1694;
G05B 2219/37537

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **20.12.2024   US 202463737261 P**

(71) Applicant: **MacDonald, Dettwiler and Associates
Inc.
Brampton, Ontario L6Y 6K7 (CA)**

(72) Inventors:
• **EL SAMID, Nader Abu
Brampton, L6Y 6K7 (CA)**

• **GROUCHY, Paul
Brampton, L6Y 6K7 (CA)**
• **PANKOV, Taras
Brampton, L6Y 6K7 (CA)**
• **NAIK, Malav
Brampton, L6Y 6K7 (CA)**
• **KUGATHASAN, Paanugoban
Brampton, L6Y 6K7 (CA)**
• **SHOJI, Yoshiki
Brampton, L6Y 6K7 (CA)**

(74) Representative: **Mewburn Ellis LLP
Aurora Building
Counterslip
Bristol BS1 6BX (GB)**

(54)   **SYSTEM AND METHOD FOR VIRTUALIZING SENSORS IN SPACE ROBOTICS APPLICATIONS**

(57)   A system and method for virtualizing sensors in a space robotics system is provided. The system includes a robotic device, a plurality of sensors for collecting telemetry about the execution of robotic tasks by the robotic device, and a flight computer comprising a virtual sensor estimator configured to receive a subset of the telemetry and output estimated telemetry that simulates an output of a hardware sensor.

**EP 4 763 440 A1**

## Description

### Technical Field

The following relates generally to space robotics, and more particularly to systems and methods for virtualizing sensors in space robotics systems.

### Introduction

Hardware sensors used on-orbit in space-based robotic systems, such as robotic arms, can be expensive and troublesome to manage. For example, some hardware sensors such as force moment sensors (FMS), are affected by the thermal environment in space. This can lead to drift in readings, necessitating frequent recalibration during operations.

Accordingly, there is a need for an improved system and method for sensing in space robotics systems that overcomes at least some of the disadvantages of existing systems and methods.

### Summary

A space robotics system is provided. The system includes: a robotic device; a plurality of sensors for collecting telemetry about the execution of robotic tasks by the robotic device; and a flight computer comprising a virtual sensor estimator configured to receive a subset of the telemetry and output estimated telemetry that simulates an output of a hardware sensor.

In an embodiment, the robotic device is a robotic arm, and the virtual sensor estimator simulates a joint torque sensor of a joint of the robotic arm and outputs estimated joint torques for the joint.

In an embodiment, the robotic device is a robotic arm, and the virtual sensor estimator simulates a force moment sensor at a joint or tip of the robotic arm and outputs a 6DOF vector estimating three forces and three moments experienced at the joint or tip of the robotic arm.

In an embodiment, the virtual sensor estimator comprises a physics-informed neural network (PINN).

In an embodiment, the PINN outputs a Lagrangian.

In an embodiment, the PINN learns the Jacobian.

In an embodiment, the virtual sensor estimator comprises a long short-term memory (LSTM network).

In an embodiment, the virtual sensor estimator comprises a physics-informed neural network comprising a long short-term memory (LSTM) network and a neural network, and the LSTM processes input data to the physics-informed neural network and provides an output to the neural network.

In an embodiment, the virtual sensor estimator comprises a general neural network and the flight computer further comprises an estimator output validation module for validating the estimated telemetry.

In an embodiment, the virtual sensor estimator is a first virtual sensor estimator and the system further comprises a second virtual sensor estimator, the first and second virtual sensor estimator simulate the same type of sensor, and the first and second virtual sensor estimators are configured for and used during different types of subtasks executed by the robotic device.

In an embodiment, the robotic device is a robotic arm, the first virtual sensor estimator is configured for and used during a contact subtask and the second virtual sensor estimator is configured for and used during a non-contact subtask.

In an embodiment, the robotic device is a robotic arm, the first virtual sensor estimator is configured for and used during a first type of contact subtask and the second virtual sensor estimator is configured for and used during a second type of contact subtask.

In an embodiment, the robotic device comprises a plurality of subsystems of the same type, the system comprises an instance of the virtual sensor estimator for each of the plurality of subsystems, and the instances are trained using the same algorithm and different training data sets.

In an embodiment, the robotic device is a robotic arm, the subsystems are joints of the robotic arm, and the instances of the virtual sensor estimator are virtualized joint torque sensors for the respective joints.

In an embodiment, the system further comprising the hardware sensor, and wherein the flight computer further comprises an anomaly detection module configured to compare the estimated telemetry from the virtual sensor estimator to an output of the hardware sensor.

In an embodiment, the virtual sensor estimator is trained according to a machine learning technique.

In an embodiment, the virtual sensor estimator comprises a Kalman filter or an extended Kalman filter.

In an embodiment, the virtual sensor estimator uses a combination of at least one machine learning model and at least one Kalman or extended Kalman filter.

In an embodiment, the estimator virtualizes a force moment sensor, and the PINN takes as input joint position and joint torque and outputs the three moments and three forces experienced at the joint or tip.

In an embodiment, the virtual sensor estimator simulates a force moment sensor of the robotic device.

In an embodiment, the virtual sensor estimator simulates a joint torque sensor at a joint of the robotic device.

In an embodiment, the virtual sensor estimator simulates a temperature sensor of the robotic device.

In an embodiment, the virtual sensor estimator simulates a current sensor of the robotic device.

In an embodiment, the current sensor senses motor current of a motorized mechanism of the robotic device.

In an embodiment, the virtual sensor estimator simulates one or more position and orientation sensors.

A method of virtualizing sensors in a space robotics system is also provided, wherein the method includes using any of the embodiments of the foregoing space robotics system.

A method of virtualizing sensors in a space robotics system is also provided. The method includes collecting, with a plurality of sensors, telemetry about execution of robotic tasks by a robotic device; providing a subset of the telemetry to a virtual sensor estimator; generating, by the virtual sensor estimator, estimated telemetry that simulates an output of a hardware sensor; and outputting the estimated telemetry.

A system for sensor virtualization is also provided. The system includes an autonomous machine, a plurality of sensors for collecting telemetry about the execution of autonomous tasks by the autonomous machine, and a flight computer. The flight computer includes a virtual sensor estimator configured to receive a subset of the telemetry and output estimated telemetry that simulates an output of a hardware sensor.

In an embodiment, the autonomous machine is a robotic device.

Other aspects and features will become apparent, to those ordinarily skilled in the art, upon review of the following description of some exemplary embodiments.

**Brief Description of the Drawings**

The drawings included herewith are for illustrating various examples of articles, methods, and apparatuses of the present specification. In the drawings:

Figure 1 is a block diagram of a robotics system including sensor virtualization, according to an embodiment;

Figure 2 is a block diagram of a robotics system including virtualization of a force moment sensor, according to an embodiment;

Figure 3 is a block diagram of a robotics system including virtualization of a joint torque sensor, according to an embodiment;

Figure 4 is a block diagram of a robotics system including virtualization of multiple joint torque sensors, according to an embodiment;

Figure 5 is a block diagram of a robotics system including a hardware sensor and a virtualized version of the hardware sensor, according to an embodiment;

Figure 6 is a block diagram of a robotics system including virtualized joint torque sensors for different types of subtasks performed by the robotic device, according to an embodiment;

Figure 7 is a schematic diagram of a physics-informed neural network used by the virtual sensor estimator of Figure 3, according to an embodiment; and

Figure 8 is a schematic diagram of a physics-informed neural network used by the virtual sensor estimator of Figure 3, according to an embodiment.

**Detailed Description**

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to space robotics, and more particularly to systems and methods for virtualizing sensors in space robotics systems.

The present disclosure provides systems and methods for sensor virtualization in a remotely operated device, such as a space robotic system, where the device is configured to perform tasks autonomously, semi-autonomously, or non-autonomously. The remotely operated device may be, for example, an autonomous machine or robotic device.

Those skilled in the art will appreciate that, although the embodiments described in the present disclosure are set forth in the context of robotic systems, the disclosed systems and methods for sensor virtualization are not so limited. The principles and techniques described herein may be implemented in connection with any remotely operated or controllable platform or device, including, without limitation, robotic systems, satellites, planetary rovers, unmanned aerial or marine vehicles, remote-operated industrial machinery, or other systems capable of receiving and executing remote instructions. Accordingly, the scope of the present disclosure should not be construed as being limited to robotic systems alone.

As used herein, the term "remotely operated device" or "remotely operated system" encompasses systems such as satellites, planetary rovers, unmanned aerial vehicles, robotic systems, industrial machinery, or other platforms that are capable of receiving and executing commands from a remote operator, whether or not the device or system further includes autonomous functionality. For example, while example embodiments of the present disclosure describe autonomous robots/machines performing autonomous operations, the sensor virtualization system may also be effectively utilized for virtualizing sensors in non-autonomous (or semi-autonomous) remotely operated devices as well.

The present disclosure applies artificial intelligence (AI) methods to virtualize a real hardware sensor used in a space robotics system, thereby obviating the need for the real hardware sensor. The virtual sensor accepts input data from a variety of other lower cost, more reliable sensors, and outputs telemetry that is accurate and precise when compared to the ground truth outputs of the sensor being virtualized. The virtual sensor may be configured to be computationally efficient and compact such that the virtual sensor can run on an onboard flight computer servicing the space robotics system.

While the embodiments described herein relate to the virtualizing of force moment sensors (FMS) and joint torque sensors of a robotic arm, such embodiments are nonlimiting examples. The sensor virtualization concepts and techniques described herein may be applied more broadly to other sensors types and other types of robotic devices, and such embodiments are expressly contemplated herein. Other envisioned sensors that may be virtualized by the systems and methods of the present disclosure may non-limitingly include position and orientation sensors, current sensors, vibration sensors, and temperature sensors. Further, while the embodiments of the present disclosure relate to space-based robotics, the sensor concepts and techniques may be applied in non-space robotics systems, particularly where the robotics system is remote and human intervention is challenging, complex, or impractical.

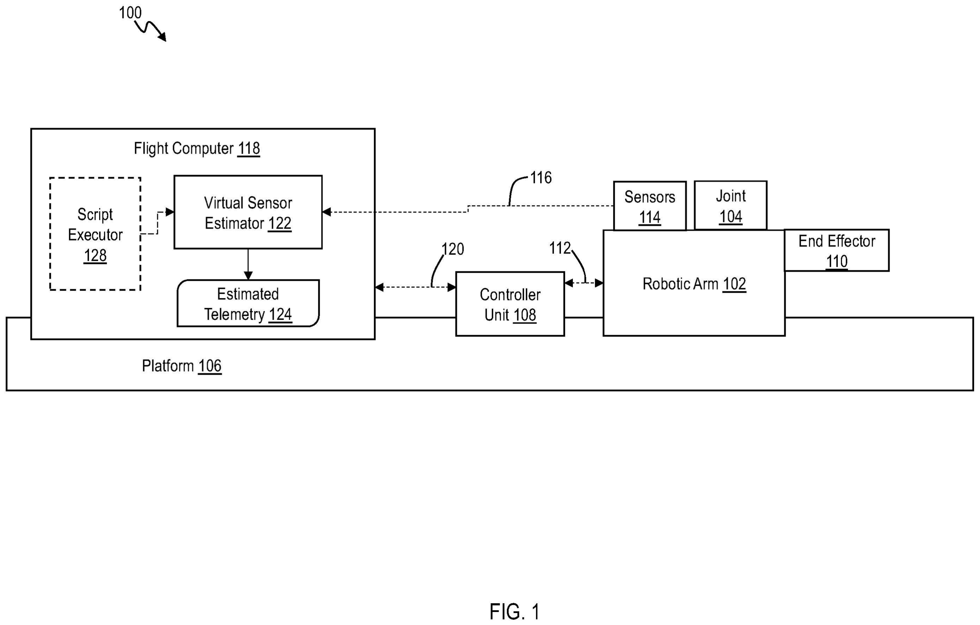

Referring now to Figure 1, shown therein is a robotics system 100 using sensor virtualization, according to an embodiment. The robotic system 100 is a space-based robotics system.

The system 100 is configured to perform one or more types of robotic operations or tasks.

The system 100 includes a robotic arm 102. The robotic arm 102 may be a serial robotic manipulator. The robotic arm 102 may be a 6-DOF robotic arm. The robotic arm may be a 7-DOF robotic arm. The robotic arm 102 includes a plurality of booms (or links/linkages) and joints for articulating the robotic arm 102. The joints include joint 104.

The robotic arm 102 is on a platform 106. The platform 106 may be a moving platform, such as on a spacecraft or rover, or a stationary platform.

The robotic arm 102 is configured to perform one or more autonomous tasks (referred to simply as "tasks") based on instruction from an arm controller 108. Tasks may be a single action or composed of a sequence of robotic actions or subtasks. The type and nature of the tasks performed by the robotic arm 102 are not particularly limited. What is important is that tasks (or subtasks) may be of different types or classes that each have their own unique sensing requirements. Example tasks or subtasks may include free space motion and contact operations and non-contact operations. Non-contact operations may include free space motion and proximity motion. Free space and proximity motion may occur with or without a payload attached to the arm 102. Free space motion may be defined as arm 102 motions outside of proximity (notionally in the volume between worksites that are not occupied by host spacecraft structure). Free space motions can occur with higher tip speed because the margin between the arm/payload and structure is larger than in proximity, so longer stopping distances/oscillations can be tolerated. Contact operations may include any task that involves the end effector 110 physically interacting with a robotic interface. Examples of contact operations include grappling payloads, payload installation and uninstallation, and capture of free flyer objects (e.g., visiting vehicles).

The robotic arm 102 includes an end effector 110 coupled to a free end of the robotic arm 102. The end effector 110 may also be referred to as a tip of the robotic arm. The robotic arm 102 manipulates, moves, and positions the end effector 110. The end effector 110 may be an end effector that can be coupled and decoupled from the end of the robotic arm 102 (i.e., picked up and removed).

The system 100 includes a robotic arm controller 108. The arm controller 108 executes control software for controlling movement of the robotic arm 102 (e.g., by controlling joint rate and position of the arm joints). The arm controller 108 may implement a functional layer of the autonomous system including function level control software components. Arm controller 108 may be implemented at a single device or across a plurality of devices. For example, arm controller 108 may be implemented partially at a control device local to the robotic arm 102 and partially at an executive control device (e.g., flight computer 118) configured to determine, plan, and schedule robotic operations. Generally, the arm controller 108 controls movement (e.g., rotation) of the arm joints, thereby enabling controlled movement of the robotic arm 102 and ultimately of the end effector 110. The robotic arm 102 and arm controller 108 are communicatively connected and the connection is represented as a hashed line 112 between the arm 102 and arm controller 108. Arm controller 108 may include computing components (e.g., processors, data storage) and other control hardware.

The system 100 includes a plurality of sensors 114 disposed on and in the environment of the robotic arm 102 for collecting telemetry data 116 about the execution of robotic tasks by the robotic arm 102.

The sensors 114 may be of multiple sensor types. Example sensors include actuator control units, camera controllers, motor controllers, force torque sensors, joint sensors, and arm controllers.

Example sensor data 116 that may be collected includes temperature, voltage, current, force, joint rates and joint positions (e.g., of joint 104), lidar data, etc. The telemetry 116 may include time series numerical and categorical data.

For embodiments virtualizing a force moment sensors (FMS), such as described herein, the input telemetry 116 may include joint positions, joint velocities, joint torques, and temperature data from basic thermal sensors. For embodiments virtualizing a joint torque sensor (JTS), such as described herein, the telemetry 116 may include joint angle measurements, angular velocities, and possibly motor currents or voltages, gearbox twist estimates, motor angles, and motor angular velocities. In both FMS and JTS virtualization, some embodiments may find value in leveraging simpler, more robust sensors 114 (e.g., joint encoders) to replicate the readings of more complex, drift-prone sensors.

It will be understood that the types and positioning of sensors 116 may vary in different implementations of system 100.

The sensors 114 feed the sensor data 116 to the arm controller 106 and the flight computer 118 (described below).

The system 100 includes an onboard flight computer (or flight computer) 118. The onboard flight computer 118 includes one or more processors for executing software components (or modules) and one or more data storage devices (e.g., computer memory) for storing data. The flight computer 118 sends and receives data 120 to and from the arm controller 108.

The flight computer 118 includes a virtual sensor estimator 122 (also referred to simply as estimator 122). The estimator 122 is a virtualized version of a hardware sensor. Typically, the hardware sensor being virtualized would be used in the system 100 if not for the estimator 122. The hardware sensor may be particularly complex or expensive. The estimator 122 is trained or configured to predict behaviour of the hardware sensor, thereby obviating the need for the hardware sensor in the system 100.

The estimator 122 receives a subset of the telemetry 116 as input data and outputs estimated telemetry 124. The estimated telemetry 124 is intended to replicate the telemetry output of the hardware sensor being virtualized by the estimator 122. In some cases, the flight computer 118 may include a telemetry filtering module that filters the telemetry 116 from sensors 114 to obtain the proper filtered subset for input to the estimator 122.

In an embodiment, the estimator 122 simulates a force moment sensor. The estimator 122 may simulate the force moment sensor at a joint or tip of the robotic arm 102 (e.g., at joint 104 or end effector 110).

In an embodiment, the estimator 122 simulates a joint torque sensor. The estimator 122 may simulate the joint torque sensor at a joint of the robotic arm 102 (e.g., joint 104).

In an embodiment, the estimator 122 simulates a position and orientation sensor of the robotic arm 102. The estimator 122 may combine readings from positional sensors to create a virtual model of the position and orientation of the robotic arm 102 that accounts for arm dynamics.

In an embodiment, the estimator 122 simulates a current sensor of the robotic arm 102. The current sensor may sense motor current of a motorized mechanism of the robotic arm 102.

In an embodiment, the estimator 122 simulates a vibration sensor of the robotic arm 102. The estimator 122 may use motor voltage and current data along with structural models to estimate vibrations in different parts of the robotic arm 102 (e.g., detect resonance issues). This may be particularly advantageous as faster moving robotic arms are used in space (e.g., as at lower speeds, any dynamic oscillatory behaviour may be detected through camera views or position/orientation sensors).

In an embodiment, the estimator 122 simulates a temperature sensor of the robotic arm 102. The estimator 122 may predict temperature based on power usage, environmental data, and heat transfer models.

The estimated telemetry 124 may be output to and used by the arm controller 108 and one or more autonomy algorithms executed by the flight computer. In some embodiments, the estimated telemetry 124 is provided an input to an anomaly detection system executed by a computer system. The anomaly detection system may be implemented onboard (e.g., at flight computer 118) or in the ground segment. The anomaly detection system may execute an anomaly detection algorithm, such as described in US Provisional Patent Application No. 63/710,885 or US Provisional Patent Application No. 63/736,716, which are incorporated by reference herein in their entirety. The anomaly detection system analyzes the estimated telemetry to detect or predict anomalous or off-nominal behaviour of the robotic arm 102 or its subsystems. In some embodiments, the estimated telemetry 124 is used by a contact dynamics prediction executed by a computer system. The contact dynamics prediction system predicts contact dynamics during contact operations performed by the robotic arm 102, such as flight capture missions and berthing. The contact dynamics prediction system may be implemented on the flight computer 118.

The estimator 122 uses a telemetry estimation algorithm. The algorithm may be machine learning-based (e.g., one or more machine learning models or algorithms), hand-coded, or a combination of machine learning-based and hand-coded algorithms. In general, it may be desired that the estimator 122 use an explainable AI or explainable machine learning technique. This may be particularly important in space-based systems and operations, where safety and verifiability are often viewed as critical.

The estimator 122 may be trained based on real past flight (real) telemetry, simulated telemetry, or a combination of real and simulated telemetry. The estimator 122 may be trained according to a traditional artificial intelligence (AI) model training process. The estimator 122 may be trained according to a supervised training method. Where the estimator 122 is trained partially or completely using simulated telemetry, the simulated telemetry may be generated using any suitable simulation technique. In particular embodiments, the simulated training telemetry may be generated by a digital twins system or hardware emulation system.

In some embodiments, the flight computer 118 may further include an estimator output verification module (not shown) for verifying the output 124 of the estimator 122. The estimator output verification module may be of particular importance when the estimator 122 is a general deep learning model (as defined herein).

To validate or evaluate estimated telemetry 124, the estimated telemetry 124 is input to the estimated telemetry validation module. The estimated telemetry validation module may be configured to detect unexpected readings. The estimated telemetry validation module either tries to correct the unexpected readings or alerts a higher-level system that there has been an anomaly. In an embodiment, the output validation module may perform a simple check to see if any predicted values exceed an expected range of outputs. In another embodiment, the system 100 includes multiple instances of virtual sensor estimator 122 predicting the same telemetry 124 and the output verification module compares and flags when their predictions diverge. The multiple estimator instances may use different real sensors as inputs.

In some embodiments, the output validation module verifies estimator output 124 by comparing the predicted telemetry 124 against known ground-truth measurements collected under controlled conditions, such as calibration data on the ground before deployment or partial telemetry from a trusted subset of the mission. The estimator output validation module may include one or more anomaly detection algorithms configured to flag outputs 124 that deviate significantly (e.g., compared to a threshold or other metric) from expected ranges. In some embodiments, the estimated telemetry 124 may be cross-validated (e.g., by the estimator output validation module) with simulated telemetry generated from high-fidelity digital twins to obtain validation metrics.

In some embodiments, the estimator output verification module may compare the virtual sensor output 124 with a calibrated hardware sensor's readings under controlled conditions, or check consistency with physical constraints (e.g., comparing predicted forces against known payload weights).

In an embodiment, the estimator 122 comprises a recurrent neural network.

In an embodiment, the estimator 122 comprises a general deep learning model. General deep learning models may include neural networks and multi-layer perceptrons (MLP). The general neural network may be trained on past flight or simulated telemetry using a supervised learning process. The term "general deep learning model" as used herein refers to a traditional deep learning model trained solely from data without explicit incorporation of physics-based constraints (in contrast to physics-informed neural networks, described herein).

In some embodiments, the flight computer 118 may further include an estimator output verification module (not shown) for verifying the output 124 of the estimator 122. The estimator output verification module may be of particular importance when the estimator 122 is a general deep learning model.

In an embodiment, the estimator 122 comprises a physics-informed neural network (PINN).

The PINN embeds known physical laws into its loss function. The known physical laws may include dynamics equations and/or conservation principles. This guiding framework helps the PINN achieve better generalization with less data and ensures that the predicted sensors outputs comply with underlying physical principles. A PINN is a special class of artificial neural network (which is a series of mathematical functions with weights that are optimized from training data) that is trained and optimized with governing physical equations.

The PINN incorporates physical laws of a dynamical system (e.g., governing the dynamics of a robotic manipulator 102) described by one or more differential equations into its loss function to guide the learning process toward solutions that are more consistent with the underlying physics. This may include incorporating in the PINN the robotic arm's dynamics governed by classical mechanics equations, such as Euler-Lagrange equations or Newton-Euler equations. This may include incorporating equations of motion, gravitational effects, and mechanical link constraints.

The PINN is a type of universal function approximator that embeds knowledge of any physical laws that govern a given dataset in the learning process and can be described by differential equations. The PINN uses data-driven supervised neural networks to learn the model and also uses physics equations that are given to the model to encourage consistency with the known physics of the system. The PINN may advantageously be a more robust model that can be generated with less data. The PINN is a neural network that is trained to solve supervised learning tasks while respecting any given laws of physics described by general nonlinear partial differential equations. The prior knowledge of general physical laws acts in the training of the neural network as a regularization agent that limits the space of admissible solutions, increasing the generalizability of the function approximation.

In an embodiment, the PINN is trained to ensure its predictions of forces and torques align with known robotic arm dynamics. For instance, the PINN loss might penalize deviations from Lagrangian or Newton-Euler derived motions, ensuring the outputs 124 of estimator 122 reflect physically plausible states. It should be noted that Euler-Lagrange is a specific equation that may be used in some embodiments. In other embodiments, other equations may be used (e.g., Hamiltonians have differential equations).

The PINN may be generated by deriving one or more physics equations (e.g., from Newtonian or Lagrangian mechanics) to be incorporated into the neural network, identifying training data (i.e., past flight or simulated telemetry 116), selecting a neural network architecture, building a loss function, and then executing a standard neural network training process using the established inputs to obtain the trained PINN.

For space robotics, the differential equations governing the dynamics of the robotic arm 102 may be the standard equations of motion derived from formulations described above. Suitable neural network architecture for the PINN may include fully connected feed-forward networks, where hidden layers approximate solutions to the dynamics equations. Networks architectures may also incorporate long short-term (LSTM) layers to handle time-dependent sequences for tasks like predicting joint torque under varying load conditions.

In a particular embodiment, the PINN uses the principle of least action which yields the Euler-Lagrange equation for deriving the governing equations. Once a dynamical system of interest is known (e.g., a 7DOF robotic arm) and its Lagrangian is defined, the set of governing equations are then derived.

In an embodiment, the estimator 122 comprises a long short-term memory (LSTM) network.

In an embodiment, the estimator 122 comprises a Kalman filter or extended Kalman filter. The Kalman filter or extended Kalman filter processes sequential telemetry to estimate the underlying system states (e.g., joint angles, velocities) and correct these estimates in real-time using a prediction-update cycle. The Kalman filter or extended Kalman filter is configured with system models (linear or extended for nonlinear) and noise covariance matrices. Over time, the filter adapts its estimates to minimize the variance between predictions and incoming sensor data.

In some embodiments, the flight computer 118 may also include a script executor module 128. The script executor 128 executes task scripts corresponding to robotic tasks or operations to be performed by the robotic arm 102. The script executor 128 sends commands based on execution of the script. The commands include commands to use the estimator 122 and to collect the subset of telemetry 116 that is input to estimator 122. The script executor 128 outputs commands on when to invoke the estimator 122. In cases where the system 100 includes multiple estimators 122, such as described herein, the script executor outputs commands on which estimator 122 to use. For example, a robotic task or operation may include subtask A, subtask B, and subtask C. The task script may include instructions to use a first estimator 122 when executing subtask B and a second estimator 122 when executing subtask C. The script executor 128 outputs commands to use the first and second estimators according to the script.

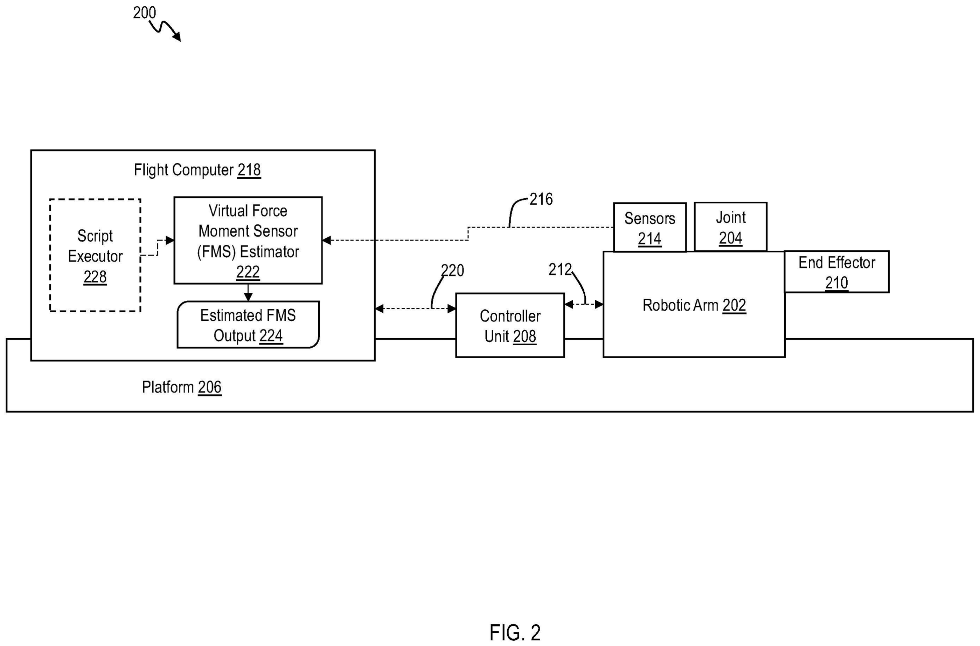

Referring now to Figure 2, shown therein is a robotic system 200, according to an embodiment. The robotic system 200 is an embodiment of the robotic system 100 of Figure 1. Like references denote like components with respect to Figure 1 (e.g., 118 corresponds to 218, etc.). Certain components present in Figure 2 with corresponding components in Figure 1 may not be described in detail. It is understood that such components perform the same or similar function as the corresponding component in Figure 1.

In system 200, the virtualized sensor estimator is a virtualized force moment sensor (FMS) 222. The FMS may be virtualized at any location on the arm at which FMS readings may be desired (e.g., at the tip of the arm, at the end of a tool, at the end of an "elbow" to detect accidental contact with station, etc.). The FMS virtualization may be adapted to any joint of the arm 102.

The virtual FMS 222 emulates performance of a hardware FMS at the tip of the arm 202. Typically, an FMS is used to control the force at the tip of the robotic arm 202, such as during contact operations performed by the robotic arm 202.

The virtual FMS 222 estimates forces and moments experienced at the tip of the arm 202 (end effector 210).

The virtual FMS 222 receives a subset of telemetry 216 as input and outputs an estimated FMS output 224.

In an embodiment, the telemetry 216 input to the virtual FMS 222 includes joint positions, velocities, and actuator torques (joint states, possibly motor currents). These inputs may remain consistent regardless of whether a PINN, general NN, or Kalman filter is used, though the approach to processing may vary.

In an embodiment, the virtual FMS 222 includes a PINN that receives joint angles (positions) and joint torques as input and predicts three forces and three moments. The joint angles may come from joint encoders. The joint torques may come from direct torque sensors or motor current readings. In some cases, the joint torques may come a predicted virtual joint torque (e.g., via a virtual JTS estimator), which is shifted to task space (force).

In an embodiment, the telemetry 216 input to the virtual FMS 222 includes joint position and joint orientation data collected by sensors 214 for one or more joints (e.g., joint 204) in the robotic arm 202. In an embodiment, the virtual FMS 222 takes input from all joints in the robotic arm 202.

The estimated FMS output 224 is a six degree of freedom (6DOF) vector output that includes three force outputs (X, Y, Z) and three moment outputs (X, Y, Z).

In an embodiment, the virtual FMS 222 comprises a PINN that uses the Euler-Lagrange equation as part of the training process. The Jacobian is used in a separate virtual FMS network for converting joint space torque to tip space forces and moments. The Jacobian matrix relates joint-space velocities and forces to end-effector velocities and forces. By learning the Jacobian, the PINN can link easily measurable joint states (positions, velocities) to the end-effector forces and moments (the FMS outputs). This is appropriate because it leverages known kinematic relationships and ensures that the estimated sensor values align with the physical structure and motion of the arm 202. The neural network of the PINN learns the Jacobian, takes as input joint position and joint torque and outputs the tip forces and moments directly. In a further embodiment, contact torque is determined and then converted using such a network.

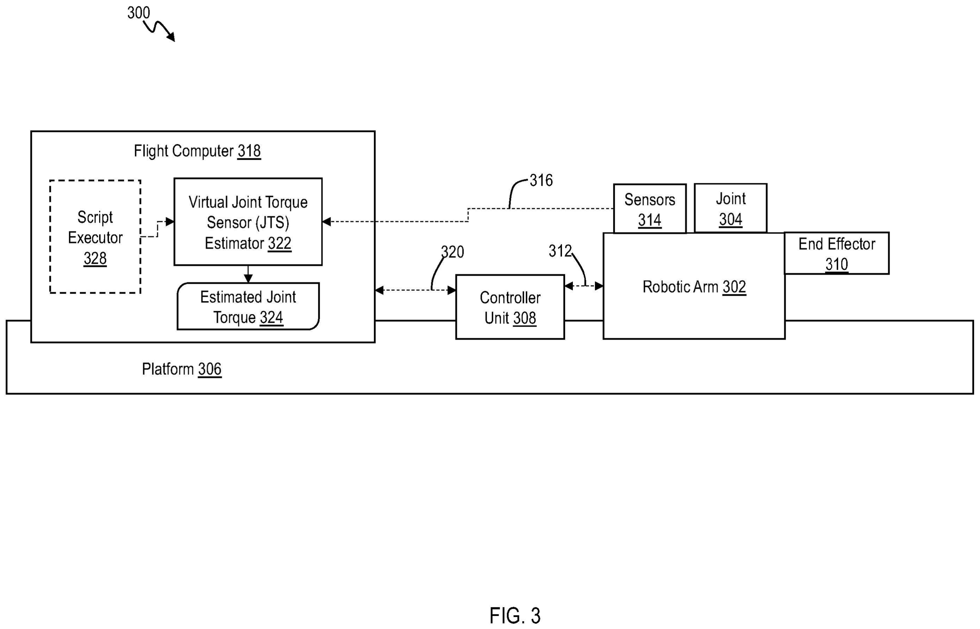

Referring now to Figure 3, shown therein is a robotic system 300, according to an embodiment. The robotic system 300 is an embodiment of the robotic system 100 of Figure 1. Like references denote like components with respect to Figure 1 (e.g., 118 corresponds to 318, etc.). Certain components present in Figure 3 with corresponding components in Figure 1 may not be described in detail. It is understood that such components perform the same or similar function as the corresponding component in Figure 1.

In system 300, the virtualized sensor estimator is a virtualized joint torque sensor (JTS) 322. The virtualized JTS 322 emulates performance of a hardware JTS at a joint of the arm 302, such as joint 304.

The virtualized JTS 322 receives a subset of telemetry 316 as input and outputs an estimated joint torque 324. In an embodiment, the inputs include joint position and joint velocity. In an embodiment, the inputs to the virtual JTS 322 include joint position (e.g., from joint encoders), joint velocity (e.g., derived from consecutive encoder readings), and possibly motor currents or actuator torques measured through onboard motor controllers. These inputs may come from a suite of simpler, existing onboard sensors that are already providing telemetry to the arm controller 108 and the flight computer 118.

In an embodiment, the virtual JTS 322 comprises a PINN that uses the Euler-Lagrange equation. The Lagrangian is part of this equation which measures the difference in kinetic and potential energy that is used to derive the set of governing equations for the PINN. The Lagrangian formulation is appropriate because it provides an elegant representation of the system's dynamics in terms of energies (kinetic and potential) rather than directly dealing with forces and moments. By using the Lagrangian, the PINN can more easily incorporate the system's physical laws, leading to more physically consistent torque estimates without having to measure forces directly, which simplifies the complexity of simulating the joint torque sensor.

One approach to solving classical mechanics is Lagrangian. The Lagrangian encapsulates the dynamics of the system in terms of energy:

$$L(\dot{q}, q) = T(\dot{q}, q) - U(q), \qquad \begin{aligned} T(\dot{q}, q) &= \text{Kinetic Energy} \\ U(q) &= \text{Potential Energy} \end{aligned}$$

From the Lagrangian of the system, the equations of motion are obtained from principle of least action, yielding an Euler-Lagrange equation:

$$\frac{d}{dt}\left(\frac{dL}{d\dot{q}_i}\right) - \frac{dL}{dq_i} = \tau_i, i = 1, .., n$$

The Lagrangian can be used in the Euler-Lagrange equation to calculate joint torques. The Euler-Lagrange Equation is performing the exact equations of motion as F=MA (Newtonian mechanics), except it is far simpler to perform this calculation with Lagrangian. This is because the Lagrangian is an energy term that can easily be measured and is a function of joint position and joint velocity for a manipulator (e.g., robotic arm 302). With Newtonian mechanics, we would have to somehow measure the vectors of forces, which would be very complicated and not an ideal method of calculating governing equations.

To this end, the equivalent Euler-Lagrange uses the generalized coordinates of joint position and the Lagrangian energy term to calculate the generalized forces and moments, which for the robotic arm 302 is the generalized torque or joint torque.

The Euler-Lagrange equation may be simpler for a manipulator 302. A network can be created such that the derivatives of Lagrangian with respect to the joint positions and velocities can be directly pulled through the network to calculate the generalized torque.

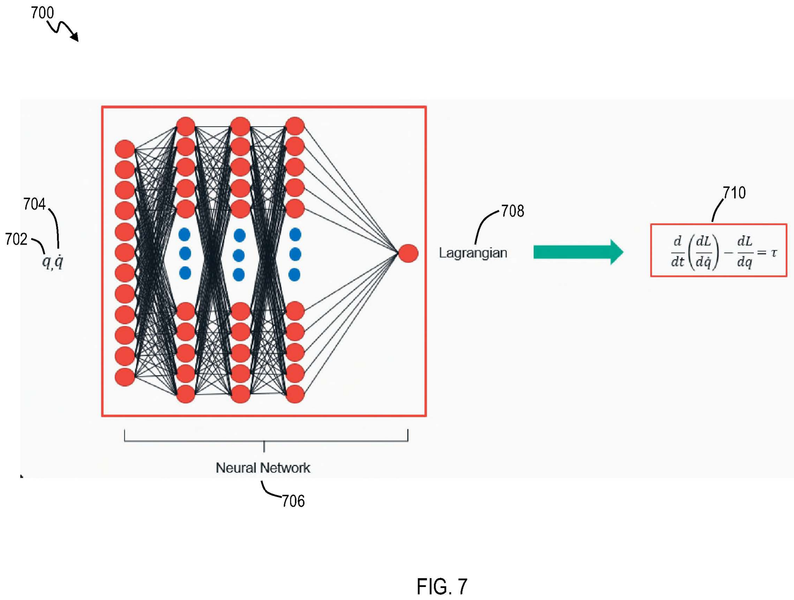

A particular embodiment in which the virtual JTS 322 is a PINN using the Lagrangian will now be described with reference to Figure 7.

In this embodiment 700, joint position 702 and joint velocity 704 are provided as input to a neural network 706 which aligns with a Lagrangian function to calculate kinetic and potential energy. The network 706 implicitly learns the other variables like mass matrix. From this network 706, a Lagrangian output 708 is obtained. The Lagrangian output 708 can be used in the Euler-Lagrange formula 710, the derivatives needed are pulled through the network 706.

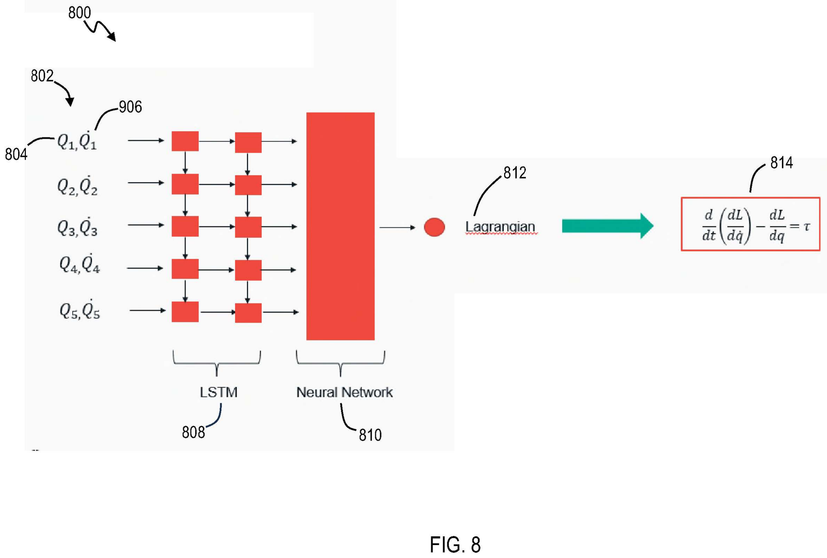

In another embodiment, as shown in Figure 8, a similar approach to the virtual JTS 322 as in Figure 7 may be used, but an LSTM may be cascaded with the Lagrangian neural network (LNN) to introduce numerical stability during the training process. Such an approach may be used where the derivative terms of Figure 7 are not being calculated as accurately as they could be through the network 706.

Figure 8 shows an LSTM-LNN network 800. The network 800 includes input data 802 including joint position 804 and joint velocity 806, an LSTM network 808, a neural network 810, a Lagrangian output 812, and a Euler-Lagrange formula 814.

The LSTM 810 is a type of recurrent neural network in that it takes a sequential data and processes the sequential data, allowing information to pass between the different parts of the sequence. The LSTM block itself has multiple gates and which control how much input and output pass through with the weights being learned.

In this approach, the network 800 uses the LSTM 810 to process the data before the data is provided to the rest of the neural network 800 (i.e., to neural network 810).

In a particular embodiment, the hyperparameters of network 800 include two LSTM layers, 128 hidden dimension, three neural network layers, a swish activation function, and an L1 loss.

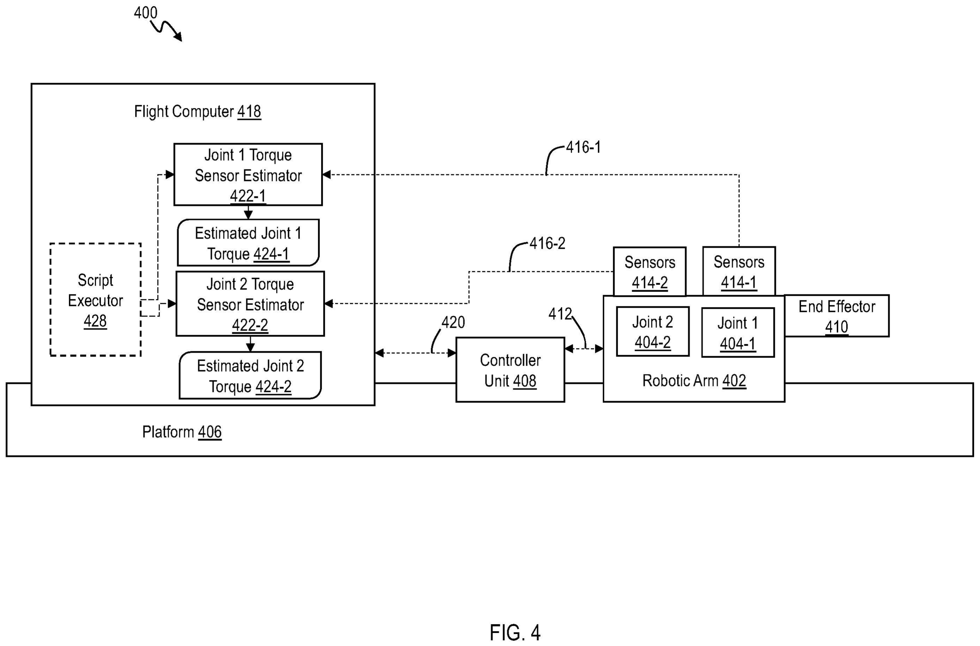

Referring now to Figure 4, shown therein is a robotic system 400, according to an embodiment. The robotic system 400 is an embodiment of the robotic system 100 of Figure 1. Like references denote like components with respect to Figure 1 (e.g., 118 corresponds to 418, etc.). Certain components present in Figure 2 with corresponding components in Figure 1 may not be described in detail. It is understood that such components perform the same or similar function as the corresponding component in Figure 1.

The robotic system 400 includes multiple estimators 122, each for a different joint in the robotic arm 102.

In system 400, the robotic arm 402 includes at least two joints 404-1, 404-2. The system 400 further includes sensors 414-1 for collecting and providing a first stream of telemetry 416-1 related to joint 404-1 and sensors 414-2 for collecting and providing a second stream of telemetry 416-2 related to joint 404-2.

System 400 further includes virtualized joint torque sensor 422-1 for joint 404-1 and joint torque sensor 422-2 for joint 404-2. The virtualized joint torque sensors 422-1, 422-2 output respective estimated joint torques 424-1, 424-2 of the joints 404-1, 404-2.

It should be noted that virtualized sensors 422-1, 422-2 may receive the same inputs but from different telemetry streams 416-1, 416-2. For example, telemetry stream 416-1 may include joint positions and joint velocities for joint 404-1 that are input to virtual sensor 422-1 and telemetry stream 416-2 may include joint positions and joint velocities for joint 404-2 that are input to virtual sensor 422-2.

In some embodiments, the virtual JTS 422-1 and 422-2 have the same neural network architecture but are trained with different datasets. This may be done because each joint in the arm will experience forces and moments from arm motion differently as they are at different parts of the arm. Also, joints will degrade at different rates, and degradation will change the way the joints behave. In some cases, estimators for the same joint may be retrained or reconfigured over time as the system ages.

While the system 400 of Figure 4 illustrates two virtual sensor estimators for two different joints in the arm 402, this is merely one example. In other embodiments, additional virtual sensor estimators may be used for additional arm joints and the number is not particularly limited.

Further, the concepts illustrated in Figure 4 may be extended to robotic device subsystems other than robotic arm joints, where there are multiple instances of a robotic device subsystem in the system that each use a same type of sensor that has been virtualized. A particular example may be a rover with a wheel subsystem for each wheel of the rover and a corresponding virtualized sensor for each wheel subsystem.

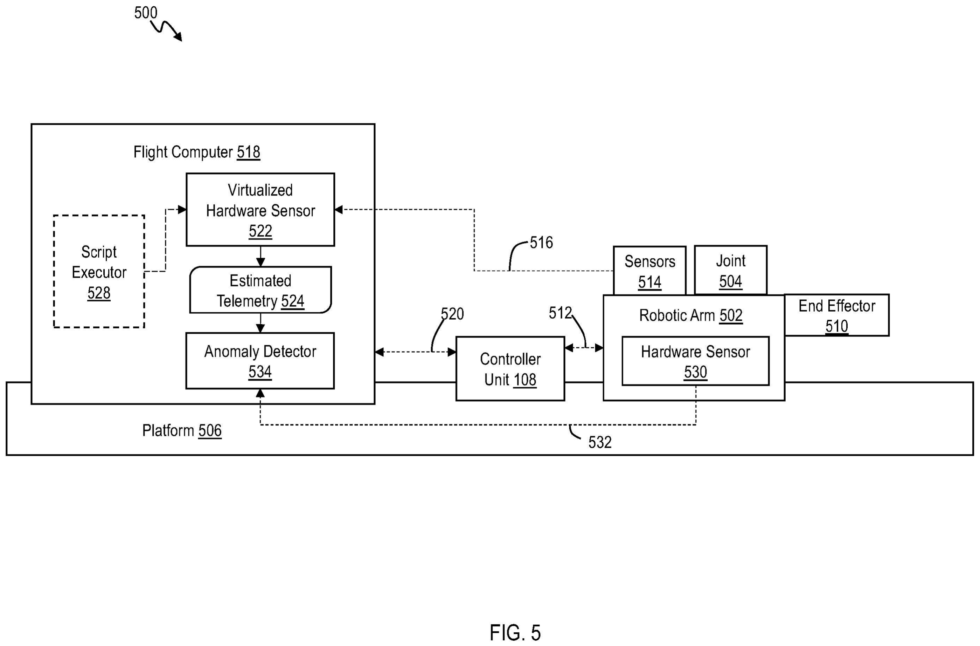

Referring now to Figure 5, shown therein is a robotic system 500, according to an embodiment. The robotic system 500 is an embodiment of the robotic system 100 of Figure 1. Like references denote like components with respect to Figure 1 (e.g., 118 corresponds to 518, etc.). Certain components present in Figure 5 with corresponding components in Figure 1 may not be described in detail. It is understood that such components perform the same or similar function as the corresponding component in Figure 1.

The system 500 includes both a virtualized hardware sensor estimator 522 and a hardware sensor 500. The estimator 522 is a virtualized version of the hardware sensor 500. For example, estimator 522 may be a virtual FMS and hardware sensor 500 a hardware FMS.

The hardware sensor 530 senses and outputs telemetry 532. The telemetry 532 is of the same form as estimated telemetry 124 (e.g., three forces and three moments for an FMS).

The hardware sensor telemetry 532 and the estimated telemetry 524 from virtual sensor 522 are provided as input to an anomaly detector module 534 running on the flight computer 518.

The anomaly detector 534 executes an anomaly detection algorithm. The anomaly detection algorithm may be a machine learning-based algorithm or model.

The anomaly detector 534 compares the simulated telemetry 524 to the real telemetry 532 and detects when the two deviate beyond what is expected or acceptable.

In some cases, the virtual sensor 522 is activated in response to a subsystem (e.g., joint 504) demonstrating problematic behaviour. The system 500 may then virtualize the subsystem 504 by activating the virtual sensor 522 (e.g., simulating a joint torque sensor for joint 504). The anomaly detector 534 compares the outputs 524, 534 of the hardware sensor 530 and the virtual sensor 522 and identifies when there is an unacceptable deviation ("detected anomaly"). In some cases, when an anomaly is detected, a subsequent action by the robotic arm 102 may be called off. This may, in some embodiments, occur autonomously, such as by providing an output of the anomaly detector 534 to the script executor 528, which responds by halting action of the robotic arm 502 (and potentially execution of a contingency script).

In some embodiments, the virtual sensor 522 may simply be activated and used when it is determined that hardware sensor 530 is malfunctioning. Such an embodiment may not require or use the anomaly detector 534.

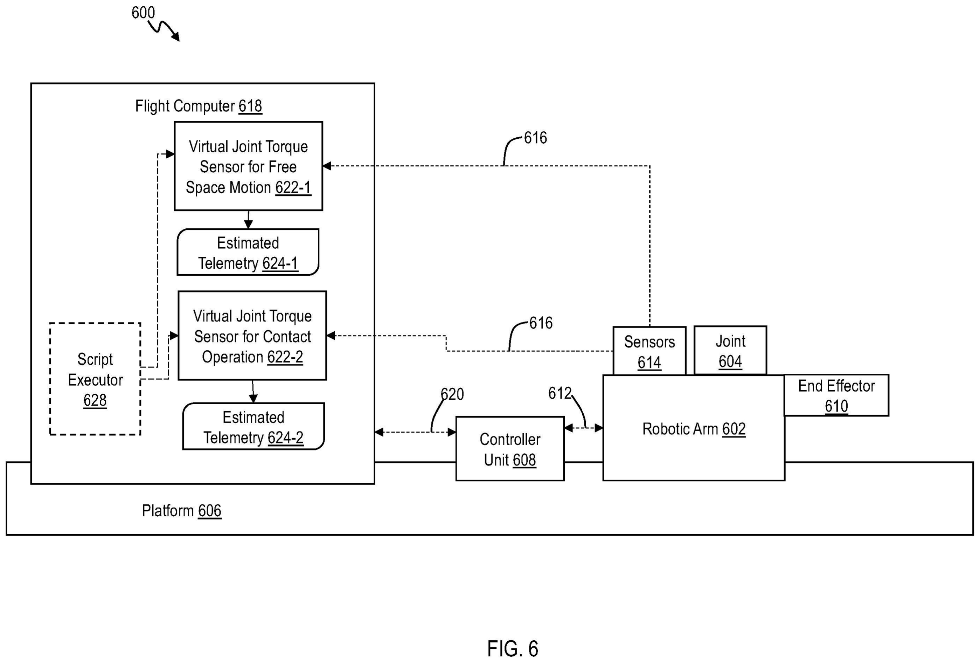

Referring now to Figure 6, shown therein is a robotic system 600, according to an embodiment. The robotic system 600 is an embodiment of the robotic system 100 of Figure 1. Like references denote like components with respect to Figure 1 (e.g., 118 corresponds to 618, etc.). Certain components present in Figure 6 with corresponding components in Figure 1 may not be described in detail. It is understood that such components perform the same or similar function as the corresponding component in Figure 1.

In system 600, a single type of hardware sensor has been virtualized in two forms for two different types of subtasks performed by the robotic arm 602.

In particular, the system 600 includes a first virtualized joint torque sensor 622-1 for joint 604 and a second virtualized joint torque sensor 622-2 for joint 604. The first joint torque sensor 622-1 is configured for and used during free space motion subtasks executed by the robotic arm 602. The second joint torque sensor 622-2 is configured for and used during a contact operation performed by the robotic arm 602. The first and second virtual joint torque sensors 622-1, 622-2 may each receive the same subset of the telemetry 616 as input or different subsets. In some embodiments, the decision to use virtual sensor 622-1 or virtual sensor 622-2, and when, may be made by the script executor 628 based on instructions encoded in a script. For example, for a robotic task involving a free space motion subtask and a contact operation subtask, the script executor 628 may issue commands to activate the first virtual sensor 622-1 prior to the performance of the free space motion subtask and to activate the second virtual sensor 622-2 prior to the performance of the contact operation.

In further embodiments, the system 600 may include additional virtual joint torque sensors for specific types or classes of contact operations (e.g., payload installation, free flyer capture, payload grappling, payload refueling, etc.). As can be seen, the number and specificity of the virtualized joint torque sensors may be varied to achieve greater granularity.

Further, the concepts presented in Figure 6 can be extended to other types of sensors to be virtualized beyond joint torque sensors. One such nonlimiting example is having multiple virtualized FMS for different types of contact operations that are each invoked when performing their respective type of contact operation.

While the above description provides examples of one or more apparatus, methods, or systems, it will be appreciated that other apparatus, methods, or systems may be within the scope of the claims as interpreted by one of skill in the art.

**Claims**

1. A space robotics system comprising:

   a robotic device;
   a plurality of sensors for collecting telemetry about the execution of robotic tasks by the robotic device;
   a flight computer comprising:
   a virtual sensor estimator configured to receive a subset of the telemetry and output estimated telemetry that simulates an output of a hardware sensor.

2. The system of claim 1, wherein the robotic device is a robotic arm, and wherein:

   the virtual sensor estimator simulates a joint torque sensor of a joint of the robotic arm and outputs estimated joint torques for the joint; or
   the virtual sensor estimator simulates a force moment sensor at a joint or tip of the robotic arm and outputs a 6DOF vector estimating three forces and three moments experienced at the joint or tip of the robotic arm.

3. The system of claim 1, wherein the virtual sensor estimator comprises a physics-informed neural network (PINN).

4. The system of claim 3, wherein the PINN outputs a Lagrangian, or wherein the PINN learns the Jacobian.

5. The system of claim 1, wherein the virtual sensor estimator comprises a physics-informed neural network comprising a long short-term memory (LSTM) network and a neural network, and wherein the LSTM processes input data to the physics-informed neural network and provides an output to the neural network.

6. The system of claim 1, wherein the virtual sensor estimator is a first virtual sensor estimator and the system further comprises a second virtual sensor estimator, wherein the first and second virtual sensor estimators simulate the same type of sensor, and wherein the first and second virtual sensor estimators are configured for and used during different types of subtasks executed by the robotic device.

7. The system of claim 6, wherein the robotic device is a robotic arm, and wherein:

   the first virtual sensor estimator is configured for and used during a contact subtask and the second virtual sensor estimator is configured for and used during a non-contact subtask; or
   the first virtual sensor estimator is configured for and used during a first type of contact subtask and the second virtual sensor estimator is configured for and used during a second type of contact subtask.

8. The system of claim 1, wherein the robotic device comprises a plurality of subsystems of the same type, wherein the system comprises an instance of the virtual sensor estimator for each of the plurality of subsystems, and wherein the instances are trained using the same algorithm and different training data sets.

9. The system of claim 8, wherein the robotic device is a robotic arm, wherein the subsystems are joints of the robotic arm, and wherein the instances of the virtual sensor estimator are virtualized joint torque sensors for the respective joints.

10. The system of claim 1, further comprising the hardware sensor, and wherein the flight computer further comprises an anomaly detection module configured to compare the estimated telemetry from the virtual sensor estimator to an output of the hardware sensor.

11. The system of claim 1, wherein the virtual sensor estimator is trained according to a machine learning technique.

12. The system of claim 1, wherein the virtual sensor estimator uses a combination of at least one machine learning model and at least one Kalman or extended Kalman filter.

13. The system of claim 3, wherein the estimator virtualizes a force moment sensor, and wherein the PINN takes as input joint position and joint torque and outputs the three moments and three forces experienced at the joint or tip.

14. The system of claim 1, wherein the virtual sensor estimator simulates any one or more of a force moment sensor of the robotic device; a joint torque sensor at a joint of the robotic device; a temperature sensor of the robotic device; a current sensor of the robotic device that senses motor current of a motorized mechanism of the robotic device; and a position and orientation sensor.

15. A method of virtualizing sensors in a space robotics system, the method comprising:

  collecting, by a plurality of sensors, telemetry about execution of robotic tasks by a robotic device;
  providing a subset of the telemetry to a virtual sensor estimator executed by a flight computer in communication with the robotic device;
  generating, by the virtual sensor estimator, estimated telemetry that simulates an output of a hardware sensor; and
  outputting the estimated telemetry.

FIG. 1

FIG. 2

300

Flight Computer 318

Script Executor 328

Virtual Joint Torque Sensor (JTS) Estimator 322

Estimated Joint Torque 324

Platform 306

316

320

312

Controller Unit 308

Sensors 314

Joint 304

Robotic Arm 302

End Effector 310

FIG. 3

FIG. 4

FIG. 5

EP 4 763 440 A1

FIG. 6

600

Flight Computer 618

Virtual Joint Torque Sensor for Free Space Motion 622-1 → Estimated Telemetry 624-1

Virtual Joint Torque Sensor for Contact Operation 622-2 → Estimated Telemetry 624-2

Script Executor 628

Platform 606

616

616

Sensors 614

Joint 604

End Effector 610

Robotic Arm 602

612

620

Controller Unit 608

FIG. 7

FIG. 8

Europäisches
Patentamt

European
Patent Office

Office européen
des brevets

## EUROPEAN SEARCH REPORT

**Application Number**

EP 25 22 6051

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO TONGYU ET AL: "Deep Learning with Fractional Order Operaters Lagrangian Method for Space Robot based on Sliding Mode-based Fixed-time Control", IECON 2022 - 48TH ANNUAL CONFERENCE OF THE IEEE INDUSTRIAL ELECTRONICS SOCIETY IEEE, 17 October 2022 (2022-10-17), pages 1-7, XP034244427, DOI: 10.1109/IECON49645.2022.9968416 [retrieved on 2022-12-09] * page 1 - page 7 * * figures 1-5 * | 1-15 | INV. B25J9/16 |
| A | Lutter Michael ET AL: "Deep Lagrangian Networks: Using Physics as Model Prior for Deep Learning", , 10 July 2019 (2019-07-10), XP093391701, Retrieved from the Internet: URL:https://arxiv.org/abs/1907.04490 [retrieved on 2026-04-24] * the whole document * | 1-15 | |
| A | LUTTER MICHAEL ET AL: "Combining physics and deep learning to learn continuous-time dynamics models", THE INTERNATIONAL JOURNAL OF ROBOTICS RESEARCH, vol. 42, no. 3, 1 March 2023 (2023-03-01), pages 83-107, XP093390789, Sage ISSN: 0278-3649, DOI: 10.1177/02783649231169492 * the whole document * | 1-15 | **TECHNICAL FIELDS SEARCHED (IPC)** <br><br> B25J <br> G05B |

-/--

The present search report has been drawn up for all claims

| Place of search | Date of completion of the search | Examiner |
|---|---|---|
| The Hague | 24 April 2026 | De Santis, Agostino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 25 22 6051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WU SHUANGSHUANG ET AL: "Dynamic Modeling of Robotic Manipulator via an Augmented Deep Lagrangian Network", TSINGHUA SCIENCE AND TECHNOLOGY, vol. 29, no. 5, 31 October 2024 (2024-10-31), pages 1604-1614, XP093390781, CN ISSN: 1007-0214, DOI: 10.26599/tst.2024.9010011 * the whole document * | 1-15 | |
| A | A DE LUCA ET AL: "Collision Detection and Safe Reaction with the DLR-III Lightweight Manipulator Arm", INTELLIGENT ROBOTS AND SYSTEMS, 2006 IEEE/RSJ INTERNATIONAL CONFERENCE ON, 1 January 2006 (2006-01-01), pages 1623-1630, XP055373275, Pi DOI: 10.1109/IROS.2006.282053 ISBN: 978-1-4244-0258-8 * the whole document * | 1-15 | TECHNICAL FIELDS SEARCHED (IPC) |

The present search report has been drawn up for all claims

| Place of search | Date of completion of the search | Examiner |
|---|---|---|
| The Hague | 24 April 2026 | De Santis, Agostino |

**REFERENCES CITED IN THE DESCRIPTION**

**Patent documents cited in the description**

- US 63710885

- US 63736716